# FASCICULE DE BREVET EUROPEEN

(11) **EP 2 651 728 B1**
(45) Date de publication et mention de la délivrance du brevet: **09.09.2015**
(21) Numéro de dépôt: 11779396.8
(22) Date de dépôt: 04.11.2011
(51) Int. Cl.: B60T 11/20, F16F 1/12

(54) **DISPOSITIF DE RESSORT PRIMAIRE DE MAÎTRE-CYLINDRE TANDEM ET MAÎTRE-CYLINDRE AINSI ÉQUIPÉ**
PRIMÄRFEDERVORRICHTUNG FÜR EINE TANDEM-MASTERZYLINDER-EINHEIT UND DAMIT AUSGESTATTETE MASTERZYLINDEREINHEIT
PRIMARY SPRING DEVICE FOR A TANDEM MASTER-CYLINDER UNIT, AND MASTER-CYLINDER UNIT FITTED THEREWITH

(30) Priorité: 17.12.2010 FR 1004953
(43) Date de publication de la demande: 23.10.2013
(73) Titulaire: Robert Bosch GmbH, 70442 Stuttgart (DE)
(72) Inventeur: MICHON, Jean-Pierre, F-77178 Saint Pathus (FR); BERNADAT, Olivier, F-94170 Le Perreux (FR); LHUILLIER, Laurent, F-93150 Le Blanc Mesnil (FR); CHARPENTIER, Carole, F-95160 Montmorency (FR)
(86) Numéro de dépôt international: PCT/EP2011/069383
(87) Numéro de publication internationale: WO 2012/079839

(56) Documents cités:
- WO-A1-01/48392

## Description

### Domaine de l'invention

La présente invention se rapporte à un dispositif de ressort primaire de maître-cylindre tandem destiné à être installé entre le piston primaire et le piston secondaire dans le maître-cylindre tandem, dispositif comprenant :
- une butée tubulaire dont le sommet est percé et dont la base est munie d'une collerette extérieure d'appui,
- une vis de retenue en traction dont la tige sort du perçage de la butée et la tête logée dans la butée est retenue contre le sommet de la butée et porte à son autre extrémité un disque d'appui,
- un ressort hélicoïdal de compression emmanché sur la butée et sur la vis et s'appuyant par l'une de ses extrémités contre la collerette de la butée et l'autre contre le disque d'appui,

L'invention concerne également un maître-cylindre tandem équipé d'un tel dispositif de ressort primaire.

### Etat de la technique

Le document WO 01/48392 A1 décrit un dispositif de ressort primaire de maître-cylindre tandem destiné à être installé entre le piston primaire et le piston secondaire dans le maître-cylindre tandem, comprenant:
- une butée tubulaire dont le sommet est percé et dont la base est munie d'une collerette extérieure d'appui,
- une vis de retenue en traction dont la tige sort du perçage de la butée et la tête logée dans la butée est retenue contre le sommet de la butée et porte à son autre extrémité un disque d'appui, et
- un ressort hélicoïdal de compression emmanché sur la butée et sur la vis et s'appuyant par l'une de ses extrémités contre la collerette de la butée et l'autre contre le disque d'appui.

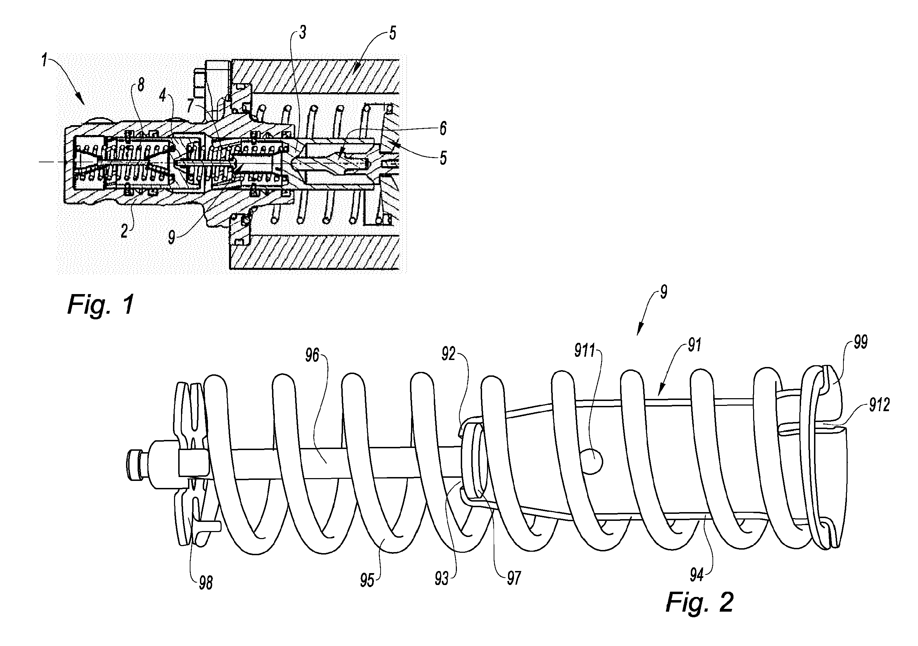

Selon l'état de la technique (figures 1 et 2), on connaît un maître-cylindre tandem 1 équipé d'un dispositif de ressort primaire tel que décrit ci-dessus.

Le maître-cylindre tandem 1 se compose d'un boîtier 2 logeant un piston primaire 3 et un piston secondaire 4. Le piston primaire 3 est actionné par le servofrein 5 représenté simplement par son poussoir 6, dans le sens de l'actionnement allant de la droite vers la gauche.

La poussée exercée sur le piston primaire 3 met en pression le liquide hydraulique emprisonné dans l'intervalle entre le piston primaire 3 et le piston secondaire 4 constituant la chambre primaire 7. Le volume de liquide pousse ainsi le piston secondaire 4 qui met lui-même en pression le liquide hydraulique de la chambre secondaire 8 ; chaque chambre 7, 8 alimente son circuit de frein (non représenté)

Le piston primaire 3 est également associé au piston secondaire 4 par l'intermédiaire d'un dispositif de ressort primaire 9 tel que celui représenté à la figure 1 et de manière plus détaillée à la figure 2, pour permettre de pousser le piston secondaire 4 en cas de défaillance du circuit primaire, par exemple en cas de fuite du circuit primaire. Dans ce cas de défaillance, le liquide hydraulique ne peut plus être comprimé dans la chambre primaire 7 et pousser ainsi le piston secondaire 4. La poussée de celui-ci se fait par transmission directe du piston primaire 3 au piston secondaire 4 avec compression du dispositif de ressort primaire 9.

Selon la figure 2, le dispositif de ressort primaire 9 connu se compose d'une butée de ressort 91 et d'un ressort 95. La butée 91 de forme tronconique, en métal embouti, dont le sommet 92 est fermé, comporte une ouverture 93 pour le passage d'une vis 96 de façon à retenir la vis par sa tête 97 à l'intérieur de la butée de ressort 91. La butée de ressort 91 a un sommet 92 fortement tronconique suivi d'un corps 94 de conicité moindre. La forme tronconique est destinée à guider la tête 97 de la vis lorsque celle-ci est rentrée dans la butée de ressort 91 par compression du ressort 95, de façon que le dispositif puisse reprendre sa disposition étendue telle que représentée à la figure 2.

La vis 96 porte à son autre extrémité un disque d'appui 98, réglable par vissage sur la tige de la vis. Le ressort de compression 95 est emmanché sur la butée de ressort 91 et sur la vis 96 pour mettre cet ensemble en tension. Le ressort 95 s'appuie par une extrémité contre une collerette extérieure d'appui 99 et son autre extrémité vient contre le disque d'appui 98.

Pour favoriser la circulation du liquide hydraulique dans la chambre primaire 7, la butée à ressort 91 est munie d'orifices 911 pour le passage du liquide hydraulique lors des mouvements de compression et d'extension du dispositif de ressort primaire, en fonctionnement normal.

Ce dispositif de ressort primaire 9 de maître-cylindre tandem, connu, a l'inconvénient d'être d'une fabrication relativement compliquée et coûteuse à cause de la butée de ressort primaire 91 qui est en acier embouti.

### But de l'invention

La présente invention a pour but de simplifier la fabrication du dispositif de ressort primaire d'un maître-cylindre tandem.

### Exposé et avantages de l'invention

A cet effet, la présente invention a pour objet un dispositif de ressort primaire de maître-cylindre tandem, caractérisé en ce que,
- la butée est une pièce tronconique en matière plastique d'épaisseur non constante, dont la paroi du sommet et au voisinage du sommet est d'épaisseur augmentée et la surface intérieure partant du sommet, est munie de nervures longitudinales de rigidification et de guidage pour la tête de la vis.

Le dispositif de ressort primaire selon l'invention a l'avantage d'une fabrication très simple de la butée de ressort par moulage et injection en matière plastique. Cette matière plastique est notamment une matière plastique renforcée par des fibres de verre. La paroi d'épaisseur non constante de la butée de ressort et l'augmentation de l'épaisseur au niveau du sommet de la forme tronconique de la butée et les nervures de rigidification intérieures, constituent une solution techniquement intéressante car facile à réaliser et à assembler. Les nervures non seulement rigidifient le sommet de la forme tronconique, mais guident également la tête de la vis et transmettent les efforts de traction exercés par la tête de vis vers la partie du corps de la butée du côté de la collerette. Il en est de même lorsque la butée doit pousser directement ou indirectement le piston secondaire du maître-cylindre en cas de défaillance du circuit primaire. Le fonctionnement de ce dispositif est particulièrement silencieux du fait du guidage de la tête de vis dans la butée de ressort et du contact entre la matière plastique et l'acier de la vis et de sa tête.

Cela réduit également les frottements entre le ressort de compression entourant la butée de ressort. Enfin, cette forme particulière au niveau du sommet de la butée de ressort diminue les contraintes.

L'invention concerne également un maître-cylindre tandem équipé d'un tel dispositif de ressort primaire et caractérisé en ce qu'il comporte une butée de ressort primaire en forme de pièce tronconique en matière plastique d'épaisseur non constante dont la paroi du sommet et au voisinage du sommet est d'épaisseur augmentée et la surface intérieure du corps comporte des nervures longitudinales de rigidification partant du sommet, la butée comportant un ressort hélicoïdal de compression et une vis de retenue à tête plate retenue derrière le sommet et sa tige traversant une ouverture du sommet et portant à son extrémité opposée à celle de la tête, un disque d'appui retenu par un écrou et recevant l'autre extrémité du ressort de compression.

### Dessins

La présente invention sera décrite ci-après de manière plus détaillée à l'aide d'une réalisation de l'état de la technique et d'un dispositif de ressort primaire de maître-cylindre tandem selon l'invention, représentés dans les dessins annexés dans lesquels :
- la figure 1 est une vue en coupe très schématique d'un maître-cylindre tandem installé à l'extrémité d'un servofrein représenté seulement de façon très partielle,
- la figure 2 est une vue à échelle agrandie du dispositif de ressort primaire de maître-cylindre, extrait du maître-cylindre selon l'état de la technique,
- la figure 3 est une vue du dispositif de butée de ressort de maître-cylindre selon l'invention, dont la seule butée est coupée par un plan axial,
- la figure 4 est une vue de détail du dispositif de la figure 3, sans le ressort hélicoïdal.

### Description d'un mode de réalisation préférentiel de l'invention

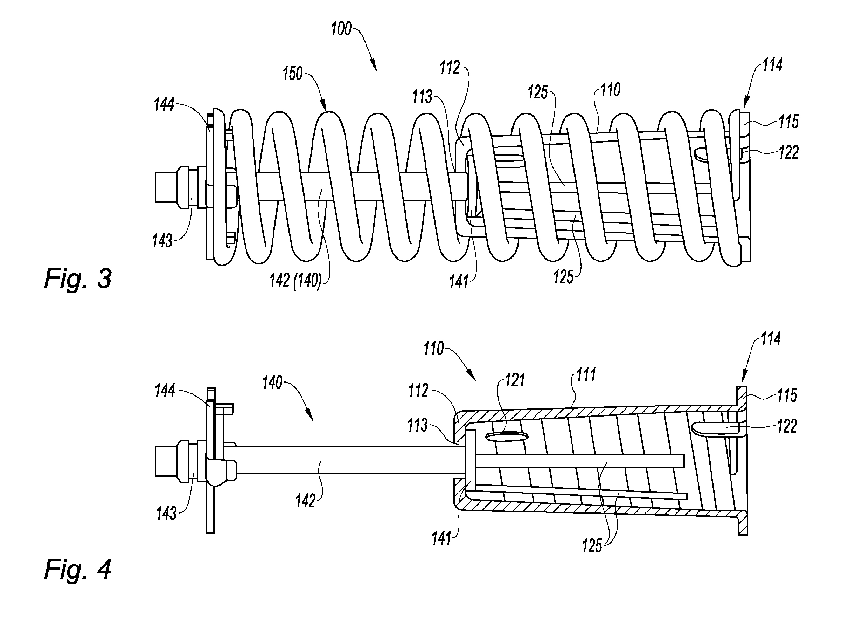

Selon les figures 3 et 4, l'invention concerne un dispositif de ressort primaire 100 de maître-cylindre, représenté hors du maître-cylindre. Ce dispositif 100 est destiné à être installé entre le piston principal et le piston secondaire dans le maître-cylindre pour écarter le piston primaire et le piston secondaire dans des conditions de fonctionnement normales hors panne et maintenir l'écartement requis entre les pistons primaire et secondaire.

Ce dispositif 100 se compose d'une butée 110 avec un corps 111 de forme tronconique creuse dont le sommet 112 est fermé par une cloison munie d'une ouverture 113 dans l'axe. La base 114 de la butée comporte une collerette extérieure d'appui 115. La butée tronconique 110 est réalisée en matière plastique, notamment renforcée par des fibres de verre. Elle est en particulier réalisée en nylon PA6.6 renforcé à 45 % de fibres de verre.

La butée tronconique 110 est munie d'ouvertures en forme de fentes 121, 122 tant dans son corps tronconique 111 que près de sa base 114 pour permettre le passage du liquide hydraulique dans et vers l'extérieur lorsque dispositif 100 est installé entre le piston primaire et le piston secondaire, c'est-à-dire dans la chambre primaire.

La butée de ressort 110 reçoit une vis 140 munie d'une tête plate 141. La vis est engagée à travers l'intérieur de la butée 110 de façon que sa tête plate 111 s'appuie contre la face intérieure du sommet 112 de la butée 110.

L'autre extrémité de la tige 142 de la vis porte un écrou 143 retenant de manière réglable un disque d'appui 144 contre lequel s'appuie une extrémité 151 d'un ressort hélicoïdal de compression 150 dont l'autre extrémité 152 s'appuie contre la collerette 115 de la base 114. Le ressort de compression 150 est un ressort hélicoïdal de compression engagé sur la butée de ressort 110 en venant par une extrémité 152 s'appuyer contre la collerette 115 et par l'autre extrémité 151 contre le disque d'appui 144.

L'intérieur de la butée de ressort 110 est muni de nervures longitudinales 125, réparties en périphérie par exemple trois ou six nervures. Ces nervures 125 s'étendent à partir du dos du sommet 112 sur une certaine longueur. Ces nervures 125 sont régulièrement réparties sur la surface intérieure ; elles guident la tête 141 de la vis lorsque celle-ci est enfoncée dans la butée de ressort 110 et lorsqu'elle revient en appui contre le dos du sommet 112. Elles rigidifient et renforcent le sommet 112 et transmettent les efforts de traction et de compression aux autres parties de la butée 110.

Le ressort de compression 150 maintient le dispositif 100 en extension.

Le dispositif de ressort primaire 100 de maître-cylindre tandem, s'installe dans le maître-cylindre tandem comme cela est représenté pour le dispositif connu à la figure 1. Le dispositif de ressort primaire 100 fait partie du maître-cylindre tandem.

L'invention s'applique aux systèmes de freinage de véhicules automobiles et à la réalisation de systèmes de freins pour véhicules automobiles.

### NOMENCLATURE

- 1: maître-cylindre tandem
- 2: boîtier du maître-cylindre
- 3: piston primaire
- 4: piston secondaire
- 5: servofrein
- 6: poussoir
- 7: chambre primaire
- 8: chambre secondaire
- 9: dispositif de ressort primaire
91 butée de ressort
911 orifice
912 orifice
92 sommet
93 ouverture
94 corps
95 ressort
96 vis
97 tête
98 disque d'appui
99 collerette extérieure
- 100: dispositif de ressort primaire selon l'invention
- 110: butée de ressort
- 111: corps de butée
- 112: sommet de butée
- 113: ouverture dans le sommet
- 114: base
- 115: collerette extérieure d'appui
- 121: ouverture
- 122: ouverture
- 125: nervures longitudinales
- 140: vis
- 141: tête plate
- 142: tige de la vis
- 143: écrou
- 144: disque d'appui
- 150: ressort hélicoïdal de compression
- 151: extrémité du ressort
- 152: extrémité du ressort

## Revendications

1. Dispositif de ressort primaire de maître-cylindre tandem destiné à être installé entre le piston primaire et le piston secondaire dans le maître-cylindre tandem,
comprenant :
- une butée tubulaire dont le sommet est percé et dont la base est munie d'une collerette extérieure d'appui,
- une vis de retenue en traction dont la tige sort du perçage de la butée et la tête logée dans la butée est retenue contre le sommet de la butée et porte à son autre extrémité un disque d'appui,
- un ressort hélicoïdal de compression emmanché sur la butée et sur la vis et s'appuyant par l'une de ses extrémités contre la collerette de la butée et l'autre contre le disque d'appui,
**caractérisé en ce que**
- la butée (110) est une pièce tronconique en matière plastique d'épaisseur non constante, dont la paroi du sommet (112) et au voisinage du sommet est d'épaisseur augmentée et la surface intérieure partant du sommet (112), est munie de nervures longitudinales (125) de rigidification et de guidage pour la tête (141) de la vis (140).

2. Dispositif de ressort primaire selon la revendication 1,
**caractérisé en ce que**
le corps (111) comporte des ouvertures en forme de fentes (121, 122) dirigées longitudinalement et situées sur le corps (111) ainsi que près de la base (114) au niveau de la collerette extérieure d'appui (115).

3. Dispositif de ressort primaire selon la revendication 1,
**caractérisé en ce que**
la butée (110) comporte un corps tronconique (111) se terminant par une base (114) bordée par une collerette extérieure d'appui (115).

4. Dispositif de ressort primaire selon la revendication 3,
**caractérisé en ce que**
l'ouverture en forme de fente (122) au niveau de la base (114) traverse la collerette extérieure d'appui (115).

5. Dispositif de ressort primaire selon la revendication 1,
**caractérisé en ce que**
la butée de ressort (110) est réalisée en nylon PA6.6 chargé de fibres de verre, notamment à 45 %.

6. Maître-cylindre tandem équipé d'un dispositif de ressort primaire selon les revendications 1 à 5
**caractérisé en ce qu'**
il comporte une butée de ressort primaire (100) en forme de pièce tronconique en matière plastique d'épaisseur non constante dont la paroi du sommet (112) et au voisinage du sommet est d'épaisseur augmentée et la surface intérieure du corps (111) comporte des nervures longitudinales de rigidification (125) partant du sommet, la butée comportant un ressort hélicoïdal de compression (150) et une vis de retenue (140) à tête plate (141) retenue derrière le sommet (112) et sa tige (142) traversant une ouverture (122) du sommet et portant à son extrémité opposée à celle de la tête, un disque d'appui (144) retenu par un écrou (143) et recevant l'autre extrémité du ressort de compression (150).

## Patentansprüche

1. Primärfedervorrichtung für eine Tandem-Masterzylinder-Einheit, die dazu bestimmt ist, zwischen dem Primärkolben und dem Sekundärkolben in der Tandem-Masterzylinder-Einheit installiert zu werden, umfassend:
- einen röhrenförmigen Anschlag, dessen Spitze durchbohrt ist, und dessen Basis mit einem äußeren Stützkragen versehen ist,
- eine Halteschraube unter Zug, deren Schaft aus der Bohrung des Anschlags austritt, und deren Kopf, der in dem Anschlag angeordnet ist, gegen die Spitze des Anschlags gehalten wird und an seinem anderen Ende eine Stützscheibe trägt,
- eine Spiralkompressionsfeder, die auf den Anschlag und die Schraube gesteckt ist und sich mit einem ihrer Enden am Kragen des Anschlags und mit dem anderen an der Stützscheibe abstützt, **dadurch gekennzeichnet, dass**
- der Anschlag (110) ein kegelstumpfartiges Teil aus Kunststoff mit einer nicht konstanten Dicke ist, dessen Wand der Spitze (112) und in der Nähe der Spitze eine größere Dicke hat, und die von der Spitze (112) weggehende Fläche mit Längsrippen (125) zur Versteifung und Führung für den Kopf (141) der Schraube (140) versehen ist.

2. Primärfedervorrichtung nach Anspruch 1,
**dadurch gekennzeichnet, dass**
der Körper (111) Öffnungen in Form von Schlitzen (121, 122) umfasst, die längs ausgerichtet sind und sich auf dem Körper (111) sowie in der Nähe der Basis (114) im Bereich des äußeren Stützkragens (115) befinden.

3. Primärfedervorrichtung nach Anspruch 1,
**dadurch gekennzeichnet, dass**
der Anschlag (110) einen kegelstumpfartigen Körper (111) umfasst, der mit einer Basis (114) endet, die von einem äußeren Stützkragen (115) umrandet ist.

4. Primärfedervorrichtung nach Anspruch 3,
**dadurch gekennzeichnet, dass**
die Öffnung in Form eines Schlitzes (122) im Bereich der Basis (114) durch den äußeren Stützkragen (115) hindurchgeht.

5. Primärfedervorrichtung nach Anspruch 1,
**dadurch gekennzeichnet, dass**
der Federanschlag (110) aus Nylon PA6.6, beaufschlagt mit Glasfasern, insbesondere zu 45%, hergestellt ist.

6. Tandem-Masterzylinder-Einheit, die mit einer Primärfedervorrichtung nach den Ansprüchen 1 bis 5 ausgestattet ist,
**dadurch gekennzeichnet, dass**
sie einen Primärfederanschlag (110) in Form eines kegelstumpfartigen Teils aus Kunststoff mit einer nicht konstanten Dicke umfasst, dessen Wand der Spitze (112) und in der Nähe der Spitze von einer vergrößerten Dicke ist, und die Innenfläche des Körpers (111) Längsversteifungsrippen (125) umfasst, die von der Spitze weggehen, wobei der Anschlag eine Spiralkompressionsfeder (150) und eine Halteschraube (140) mit flachem Kopf (141), der hinter der Spitze (112) gehalten wird, wobei ihr Schaft (142) durch eine Öffnung (113) der Spitze hindurchgeht und an seinem dem Kopf gegenüberliegenden Ende eine Stützscheibe (144) trägt, die von einer Mutter (143) gehalten wird und das andere Ende der Kompressionsfeder (150) aufnimmt.

## Claims

1. Primary spring device for a tandem master cylinder, which is intended to be installed between the primary piston and the secondary piston in the tandem master cylinder, comprising:
- a tubular abutment of which the crown is drilled and of which the base is provided with an outer bearing collar,
- a retaining tension bolt of which the shank emerges from the drilling in the abutment and the head housed in the abutment is retained against the crown of the abutment and bears a bearing disc at its other end,
- a helical compression spring fitted over the abutment and over the bolt and bearing by one of its ends against the collar of the abutment and by the other against the bearing disc,
**characterized in that**
- the abutment (110) is a plastic frustoconical part having a non-constant thickness, of which the wall of the crown (112) and in the vicinity of the crown has an increased thickness and the inner surface starting from the crown (112) is provided with longitudinal stiffening ribs (125) for guiding the head (141) of the bolt (140).

2. Primary spring device according to Claim 1,
**characterized in that**
the body (111) comprises openings in the form of slots (121, 122) directed longitudinally and situated over the body (111) and close to the base (114) at the outer bearing collar (115).

3. Primary spring device according to Claim 1,
**characterized in that**
the abutment (110) comprises a frustoconical body (111) terminating in a base (114) bordered by an outer bearing collar (115).

4. Primary spring device according to Claim 3,
**characterized in that**
the opening in the form of a slot (122) at the base (114) passes through the outer bearing collar (115).

5. Primary spring device according to Claim 1,
**characterized in that**
the spring abutment (110) is made of nylon PA6.6 filled with glass fibres, in particular to the extent of 45%.

6. Tandem master cylinder equipped with a primary spring device according to Claims 1 to 5,
**characterized in that**
it comprises a primary spring abutment (110) in the form of a plastic frustoconical part having a non-constant thickness, of which the wall of the crown (112) and in the vicinity of the crown has an increased thickness and the inner surface of the body (111) comprises longitudinal stiffening ribs (125) starting from the crown, the abutment comprising a helical compression spring (150) and a retaining bolt (140) with a flat head (141) retained behind the crown (112) and its shank (142) passing through an opening (113) in the crown and bearing, at its end opposite to that of the head, a bearing disc (144) retained by a nut (143) and receiving the other end of the compression spring (150).
